(19) Europäisches Patentamt / European Patent Office / Office européen des brevets

(11) **EP 2 444 460 B1**

(12) **EUROPEAN PATENT SPECIFICATION**

(45) Date of publication and mention
of the grant of the patent:
**06.03.2019 Bulletin 2019/10**

(51) Int Cl.:
*C09C 1/00* *(2006.01)*   *C22B 34/14* *(2006.01)*
*C08K 7/28* *(2006.01)*   *C09D 7/40* *(2018.01)*

(21) Application number: **10386016.9**

(22) Date of filing: **25.10.2010**

(54) **Milled expanded volvanic glass as lamellar filler**

Durch Mahlen ausgebreitetes Vulkanglas als Lamellenfilter

Verre volcanique étendu broyé en tant que charge lamellaire

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(43) Date of publication of application:
**25.04.2012 Bulletin 2012/17**

(73) Proprietor: **Imerys Industrial Minerals Greece S.A.
14564 Kifissia (GR)**

(72) Inventors:
• **Dedeloudis, Christos
171 23 Nea Smyrni Attikis (GR)**

• **Karalis, Thanasis
142 35 Alsoupoli Attikis (GR)**

(74) Representative: **Haseltine Lake LLP
Bürkleinstrasse 10
80538 München (DE)**

(56) References cited:
**WO-A1-2007/102825   US-B1- 6 464 770**

• **SODEYAMA K ET AL: "Preparation of fine
expanded perlite", JOURNAL OF MATERIALS
SCIENCE, KLUWER ACADEMIC PUBLISHERS,
BO, vol. 34, no. 10, 1 May 1999 (1999-05-01), pages
2461-2468, XP019209350, ISSN: 1573-4803, DOI:
DOI:10.1023/A:1004579120164**

**Description**

This invention relates to an improved filler product based on milled expanded volcanic glass like expanded pitchstone or expanded pumicite, expanded perlite or expanded pumicites for use as TiO2 extender in paints, as IR retaining fillers in LDPE films and as volume resistivity enhancer in cable covers.

Worldwide more than 50 million tons of fillers with a total sum of ca. 25 billion Euro for different application areas, such as paper, plastics, rubber, paints and adhesives, are consumed annually. Fillers are substances that are used predominantly to cheapen end products. However, there are fillers that are also able to enhance technical or optical properties of the end products and these are called functional fillers. The largest part (around 40%) of the global production of industrial minerals is functional fillers. Among different types of functional fillers, there is a big family with platelet shape and aspect ratio normally above 5:1 that is extensively used in paper, paints and polymers due to their shape ('lamellar or secondary fillers') with talc and calcined kaolin to be characteristic representatives of this family. There are applications where lamellar fillers have clear technological behefits which make them indispensable for the relevant producers such as in paints as TiO2 extenders, in agricultural (greenhouse) LDPE films as IR retaining fillers or in cable manufacturing as volume resistivity enhancers.

In the production of paints, lamellar fillers like talc or calcined kaolin are used in order to obtain better packed coating, by the penetration of lamellar fillers in-between the nodular fillers (e.g. titanium oxide and calcium carbonate). In that way, especially in enamels and varnishes for industrial use, lamellar fillers can enhance the durability of the coatings. Moreover, the lamellar fillers' platelets that go in-between the nodular particles, spread them apart and therefore, improve the rheological behaviour of the paint and the stability over time.

The most important however effect of the lamellar filler is that they improve the effectiveness of pigments (especially of titanium dioxide that is very expensive) by spreading apart small nodular particles. Therefore by using smaller quantities of pigments paints' manufacturers obtain high whiteness. That's why lamellar fillers are also known as titanium dioxide extenders. The most important property of lamellar filler is their dry hiding power or covering power of the paint, which is quantified by measuring how many square meters ($m^2$) can be covered with 1 It of paint. Actually, the covering power is a quantification of all the above effects since when solids are well dispersed in paint, they are packed also well when paint dries out and thus there is high coverage of the surface with thinner coatings. Therefore, less solids and less pigments are required per $m^2$ of the surface to be covered. Moreover, lamellar fillers, due to the better packing of the solids that they cause in a coating, enhance the wet scrub resistance of the dry coating. Important properties in order to achieve these effects are the particle size, the whiteness, the yellowness and the oil absorption of the filler.

In agricultural films, it is well known that the addition of inorganic fillers can influence the Infrared (IR) or heat retention of the film by decreasing the transmission in the mid to far infrared radiation. Low Density Polyethylene Films (LDPE) is used in the agricultural and horticultural applications such as greenhouses construction. LDPE has a high transmission in the mid to far infrared region and so the heat generated and accumulated in the greenhouse due to the action of sunlight on the plants and soil will be rapidly lost. At night, the longer wavelength infrared light is emitted by plants and soil and causes the cooling of greenhouse. The infrared rays radiated at a high rate from the ground and plants lie in wavelengths ranging from 5-25 $\mu$m. The lower the transmission of infrared radiation through the covering the better is the heat retention, and the greater the 'greenhouse effect'. Heat loss can be reduced and controlled by incorporation of IR absorbing additives (=IR retaining fillers) into LDPE films. These additives are added to polymer films in order to improve the heat retention by decreasing the transmission in the mid to far infrared radiation. An IR masterbatch contains 50%wt of IR-retaining filler. The Masterbatch is added at a level of 5-10% in the LDPE matrix. IR retaining fillers should have very low iron content (less than 1,0%) in order not to influence negatively the mechanical properties of the film under ageing conditions. A very commonly used filler used as an IR retaining filler is calcined kaolin or dehydrated kaolinites as it is described in U.S. Pat. 4,115,347 (Pied;1978). The heat retention of the agricultural film is evaluated by measuring the Infrared (IR) Absorbency or Thermicity of the film (Pied; 1978, Scwartz et al.; 1997) which is calculated as follows:

$$\text{Thermicity} = [A_i/A_o] \times 100$$

where

A$_i$ is the area integrated under the transmittance spectrum between 700 and 1400 $cm^{-1}$ at the case of transmittance through the film
and

$A_o$ is the area between 700 and 1400 cm$^{-1}$ at the case of 100% transmittance.

% Thermicity is a measurement of the heat that cannot be retained by the film and therefore the lower the thermicity, the better for the plants growth. The thermicity of pure LDPE films is above 60% for films with 100$\mu$m thickness and is dropped to above 30% by incorporating 5% of calcined kaolin and to below 20% by incorporating 10% of calcined kaolin.

In cable covers, lamellar mineral fillers are used in cable production so as to increase the Volume Electrical Resistivity of the cable cover of low, medium and high voltage cables. Castelli et al. (GB 1,516,708; 1975) report the usage of calcium carbonate, calcined kaolin or other natural silicates, such as talc, as additives in insulation covers. As it can be seen in the table below, calcined kaolin and metakaolin have the best possible volume resistivity in comparison to other fillers:

| Filler | Volume Resistivity, (Ohm * cm) |
| --- | --- |
| Ground calcium carbonate | $7 * 10^{12}$ |
| Hydrous kaolin | $30 * 10^{12}$ |
| Hydrous kaolin, silane-treated | $50 * 10^{12}$ |
| Calcined kaolin | $50 * 10^{12}$ |
| Calcined kaolin, silane-treated | $100 * 10^{12}$ |
| Metakaolin | $300 * 10^{12}$ |

In different applications, therefore, there is a need for a lamellar filler with fine particle size, with as high as possible aspect ratio, with high whiteness and low oil absorption and that would function as $TiO_2$ extenter in paints and in plastics, as IR retaining filler in agricultural polymer films and as volume resistivity enhancer in low-, medium- or high-voltage polymeric insulation cable covers. In one example, using rapid heat furnace, fine expanded perlite with particle size under 15 $\mu$m and bulk density under 0.5 g/cm3 has been disclosed in Sodeyama K et al., "Preparation of fine expanded perlite", Journal of Materials Science, vol 34, no. 10, 1999, pp 2461-2468.

Graded hydrated volcanic glasses like pitchstone or expanded pumicite, perlite, pumicites or other hydrated volcanic glasses susceptible to expansion at elevated temperatures, can be expanded in such a special way inside any type of expansion furnace so as the maximum possible number of fractured expanded perlite grains to be created. This is a critical production differentiation and is contrary to what normally happens in industrial minerals processing plants, where expansion conditions are chosen in such way so as to expanded volcanic glass grains - such as expanded perlite-to be produced as intact as possible during thermal treatment and air transportation. In the controlled expansion and milling conditions described in this invention, platelet shaped particles of volcanic origin are produced in such a way so as to look like broken Christmas balls. Depending on the expansion degree and the targeted fineness, these platelets can have controlled large aspect ratio (more than 3:1) and down to zero curvature and look like other fine lamellar fillers as talc or calcined kaolin platelets. Moreover, these volcanic glass flattish flakes retain their key properties (whiteness, yellowness, etc) in the same range as talc and calcined kaolin.

Hydrated volcanic glasses are naturally occurring siliceous rocks that are expandable, i.e. when heated rapidly to a suitable point in its softening range, they expand from four to twenty times its original apparent volume. There are also forms of volcanic glasses that are already very porous "in situ" and thus they yield granular material of similar, high apparent volume without expansion. The main constituent of volcanic glasses is amorphous silica (65-76% $SiO_2$), while they contain lower quantities of aluminium, potassium, sodium, calcium, iron and magnesium. Part of the total alkalis ($Na_2O+K_2O = 6$-10%) is present in the amorphous matrix forming a solid solution. Expansion of the granules of expandable hydrated volcanic glass is due to the presence of 'combined' or 'chemically bound' water (i.e. OH$^-$, Silanol groups SiOH, $H_2O$ molecules) in the crude rock. Those types of 'water' are known to dramatically affect a number of properties: when quickly heated to above softening point (600-650°C), the volcanic glass enters the 'softening area' and the contained water forms forces the granules from inside to 'pop' in a manner similar to popcorn as the $H_2O$ vaporizes and creates countless tiny bubbles which account for the light weight (i.e. very low Loose Bulk Density) and other exceptional physical properties. Well-known expandable minerals/rocks of this category are perlites with combined water of 2-5 wt% and pitchstone or expanded pumicite s with combined water above 5%. The production of expanded volcanic glass is a two-stage process. The ore is firstly mined, pre-crushed, ground and graded in the plant, which is usually located nearby the mine and close to the loading/shipping point. The graded granular volcanic glass is then transported to the expansion plants (by ships or rail cars) where it is expanded to form lightweight granules in vertical or horizontal expansion furnaces (Neuschotz, 1947; Zoraldi, 1952).

Expanded volcanic glass and especially expanded perlite have been used as lightweight insulating materials, as horticultural and hydroponic media, as oil absorbents for treating oil spills and as chemical carriers (Breese and Barker, 1994). For all those known applications, production parameters are controlled in such a way that expanded perlite granules combine two properties: 1)they have a pre-specified relatively low loose bulk density, and 2)in the same time, they retain the semi-spherical shape intact as much as possible. The combined properties are achieved by expanding the raw volcanic glass granules in a smooth way.

Specifically, in order to reduce the violent expansion of raw perlite in the furnace, the combined water of raw perlite fed to the furnace needs to be below 4% by weight, preferably below 3,5% and most preferably below 3%. That can be achieved either by selective mining of perlites and other expandable volcanic glasses with combined water below 4% by weight or, in the most of the cases, by preheating raw perlite before feeding to the expansion furnace so as to reduce combined water content at the desirable levels. For keeping expansion as smooth as possible, raw perlite is fed to the vertical furnace at distances from 2 up to 4 m above the flame depending on the grain size distribution. This technique allows for raw perlite to be heated gradually up to softening point. Moreover, fuel consumption and air draft settings are kept under strict control and within a range that raw perlite is residing in the furnace for a certain time so as to expand and yield well shaped semi-spherical bubbles and not disintegrate and break apart into tiny flakes.

For specific applications, commercially available expanded perlite and pumicites, produced according to the method described above, can be further milled and separated up to median sizes larger than 15 microns for use as filter aid and as insulating fillers in the manufacture of texture coatings. Milled expanded perlite can be further micronized using different types of mills at sizes below 11 $\mu$m for use as anti-block filler in plastic films and reinforcement filler in polymers (Wang et al., 2007). In both the above-mentioned applications and inventions, filter aid and micronized functional filler was produced from conventionally expanded perlite without any consideration and targeting to producing lamellar platelet shaped filler. Actually, for the use of milled expanded perlite in filter aid application, the preservation of certain curvature is a prerequisite for its good performance.

Moreover, its use as anti-block filler has not been correlated to the full elimination of any curvature but only to its fine size. In general, milled or micronized expanded perlite has never been considered in literature or industrial practice as lamellar platelet-shaped functional filler consisting only of flattish flakes of practically nil-curvature and this is the new concept that this invention brings to the foreground as far as it concerns the production technique and the manufacturing target.

In the present invention, volcanic glass, being raw perlite or pitchstone or expanded pumicite or expandable pumicite, is expanded by heating up at conditions where raw perlite is expanded as violently as possible - in contradiction to the current state of the art in the perlite expansion technology and common practice. This is achieved by using volcanic glasses with combined water content as high as possible and definitely above 2,0 % by weight, preferably more than 3,0% and most preferably more than 4,0% by weight.

Moreover, any preheating, thermal pre-treatment or calcination processing of raw material prior to the feeding in the expansion furnace should be eliminated and avoided. Finally, raw perlite should be fed as close to flame as possible, with a limitation the avoidance of glassification of raw volcanic glass (where all particles are sintered in glassy agglomerates). Finally, the temperatures, even in the upper part of the expansion furnace tube and close to the ending curve of it, should be kept well above 650°C, preferably above 700 °C and most preferably above 750 °C up to 1100°C and keep at the same time the volume rate of the air draft (Nm$^3$/min) as low as possible. The temperature and the draft air volume depends significantly on the softening point and the combined water content of the feed volcanic glass and therefore, it is difficult to be predetermined for any volcanic glasses. The feed raw volcanic glass could be lower than 5 mm and greater than 0,045 mm, more preferably below 1 mm and most preferably less than 0,6mm. The result of the expansion under these conditions would be fractured expanded perlite shells similar to egg shells or broken hollow spheres. Similar outcome could be achieved with other type of expansion furnaces like double- or single-wall horizontal ones with gas flame, vertical electrical ones with controlled temperature zones or with microwave induced expansion furnaces.

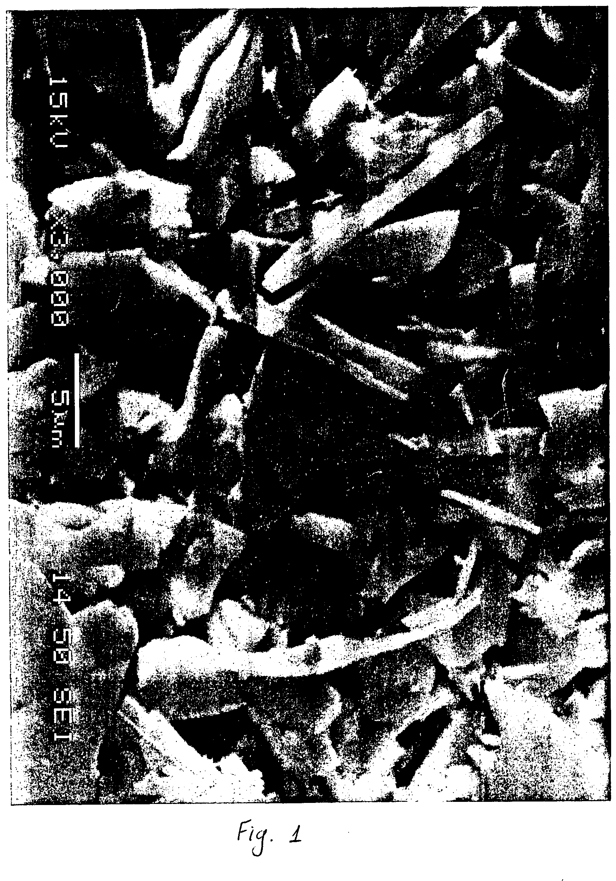

The outcome of this expansion stage is further micronized using a micronization mill such as a fluidised-bed jet mill so as to produce a lamellar flat micronized filler with a median particle size less than 10$\mu$m and at the same time a lamellar shape with aspect ratio more than 5:1, in applications where lamellar shaped fillers are necessary as the ones described above. Parameters such as feed material loading, rotation speed of the classifier wheel, inlet air pressure and temperature are optimized to achieve various embodiments for desired products. Typical but not limited working ranges of these parameters are air inlet pressure from 7 up to 12 bar and air temperature from 100 up to 200°C, classifier rotation speed from 1000 up to 6000 rpm and feed material loading from 10 up to 2000 Kg/h. The combination of the described expansion process together with the the described milling process leads to a flat lamellar filler consisting of platelets without curvature and with aspect ratio larger than 5:1 and most preferably larger than 10:1, as can be seen also in the SEM micrograph (Figure 1).

The milled lamellar filler derived from expanded volcanic glass as described above has a median particle size less than 10 $\mu$m, preferably less than 7 $\mu$m and most preferably less than 5 $\mu$m as determined by laser particle analysis method. The milled lamellar filler is further characterized by having whiteness, i.e. reflectance values under a green filter measured in a colorimeter according to DIN53145, greater than 80; greater than 85 or in one preferred embodiment greater than 85. Finally, the derived lamellar filler has an oil absorption value less than 70 grams of linseed oil per 100 grams of filler and for certain embodiments (depending on the median particle size) less than 60 grams of linseed oil per 100 grams of filler, measured according to Gardner-Coleman Method - ASTM D1483-95 (Reappr. 2002).

In one embodiment, this lamellar filler, produced from milled expanded volcanic glass and characterized by high aspect ratio and nil-curvature, high whiteness and low oil absorption can be used as a $TiO_2$ extender in paints or as durability enhancer similarly to calcined kaolin or talc. Specifically, milled volcanic glass with median particle size less than 8 $\mu$m and preferably less than 6 $\mu$m, when is added in architectural waterborne paints in percentages between 0,1 and 10% by weight, preferably between 3 and 8% by weight, allows the reduction of $TiO_2$ content in the recipe by at least 5% and the replacement of the latter with very fine calcium carbonate with median particle size less than 2 $\mu$m. The dry opacity, measured according to ISO 2814 method, of the paint with the lamellar milled volcanic glass is higher than the paint with calcined kaolin and talc. The produced coating presents higher resistance to light fastness more than 600h, measured according to method ISO2809 and wet scrub resistance more than 10000 cycles, measured according to method EN 11998. Moreover, the produced coating presents higher resistance to humidity, more than 300h as measured according to ISO6270 method in comparison to coatings with calcined kaolin and talc that has resistance to humidity more than 200h.

In another embodiment, derived milled volcanic glass with median particle size less than 5$\mu$m and preferably less than 3 $\mu$m, when added in waterborne and solvent borne enamels in percentages between 1 and 5% by weight and preferably above 2% by weight instead of talc, results in enhancement on the durability of industrial coating against corrosion, expressed as resistance to neutral salt spraying (ISO method 7253), resistance to blistering (ISO method 4628/2), resistance to rusting (ISO method 4628/3), resistance to cracking (ISO method 4628/4) and resistance to flaking (ISO method 4628/5). The enhancement on the durability of the industrial used coatings is a strong proof of the lamellarity and the absence of curvatures of the derived milled volcanic glass particles, which are packed after drying in a unique and highly efficient arrangement.

In a further embodiment, this lamellar filler with median particle size less than 8 $\mu$m and preferably less than 6 $\mu$m, enhances the volume electrical resistivity of polymer matrix, preferably of PVC, used as insulation cover for low, medium or high voltage cables. Specifically, when added in a polymer matrix, preferably but not limited to polyvinylchloride (PVC), at concentrations up to 20 parts per hundred parts of resin (phr), the volume resistivity of the final product is measured above $50 \times 10^{12}$ Ohm*cm and specifically more than $100 \times 10^{12}$ Ohm*cm.

In a final embodiment, this lamellar filler with median particle size less than 8 $\mu$m and preferably less than 6 $\mu$m, is added in polymer compositions for the production of agricultural film for greenhouses construction and is typically present at concentrations from 1 up to 15% by weight of the final polymer film, preferably between 2 to 12% by weight and most preferably between and 5 and 10 % by weight in order to increase the heat retention of the agricultural film. The polymer composition comprises at least one polymer like Low Density Polyethylene (LDPE), Linear Low Density Polyetheylene (LLDPE), High Density Polyethylene (HDPE) and Ultralow Density Polyethylene (ULDPE) of which LDPE is preferred. Further examples of suitable thermoplastic polymers include Ethyl Vinylacetate (EVA) as a copolymer with polyethylene. Polymer films containing milled volcanic glass platelet shaped particles present significantly lower thermicity than films of pure polymer matrix.

Example 1

Waterborne paints were produced based on the recipe, shown in Table 1 below with the use of milled volcanic glass with median particle size less than 5 $\mu$m. For comparison, the standard recipe was also prepared and the dry opacity, the resistance to humidity and the resistance to light fastness of the two recipes were measured according to methods ISO2814 and ISO2809 respectively.

| | Standard Recipe | Test with Volcanic Glass |
|---|---|---|
| TiO2 | 21,16% | 19,00% |
| Calcium Carbonate, Median particle size <2 $\mu$m | 7,87% | 11,00% |
| Talc | 6,40% | |
| Porous Calcium Carbonate, median particle 1,6 $\mu$m | 7,38% | 7,38% |
| Volcanic Glass | | 8,00% |
| Calcium Carbonate, median particle <1 $\mu$m | 10,33% | 7,00% |

(continued)

| | Standard Recipe | Test with Volcanic Glass |
|---|---|---|
| Dry opacity, ISO 2814 | 97.46 | 98.9 |
| Resistance light fastness | >600h | >600h |
| Resistance to humidity | >200h | >300h |

It is evident that even though there is 2% less titanium dioxide in the recipe with volcanic glass, the dry opacity is kept at higher lever than the standard recipe

Example 2

A series of blown LDPE films of about 100 $\mu$m were prepared containing 5% and 10% by weight of milled volcanic glass, and specifically expanded perlite, of median particle size below 5 $\mu$m. The thermicity measured in films with 5% filler loading below 30% and with 10% filler loading present a thermicity well below 20% in comparison to a thermicity of above 60% of the pure LDPE.

**Claims**

1. A milled volcanic glass filler consisting either of expanded perlite or expanded pitchstone or expanded pumicite or comprises an iron content less than 1 %wt, wherein the perlite, or pitchstone or pumicite originally comprises a combined water content more than 2,0% by weight before being expanded, which comprises total alkalis content ($Na_2O+K_2O$) in the range 6.0%-10.0%, and wherein the milled volcanic glass filler has a median particle size less than 10 $\mu$m and at the same time its particles have a lamellar shape of nil-curvature and an aspect ratio larger than 5:1.

2. A milled volcanic glass filler according to claim 1 having a median particle size less than 7 $\mu$m.

3. A milled volcanic glass filler according to claim 1 having a median particle size less than 5 $\mu$m.

4. A milled volcanic glass filler according to any one of claims 1 to 3 wherein the main constituent is amorphous silica.

5. A milled volcanic glass filler according to any one of claims 1 to 4 which further comprises Aluminium.

6. A polymer matrix or a polymer film or water borne or solvent borne paint which comprises the milled volcanic glass filler according to claims 1 to 5.

7. A process for the preparation of a milled volcanic glass filler according to claim 1, comprising the steps of:

   - providing volcanic glass which is selected from the group of perlite, pitchstone and pumicite, with combined water more than 2,0% by weight,
   - expanding the volcanic glass in a expansion furnace which is selected from the group consisting in a vertical expansion furnace or an electrical expansion furnace or a microwave induced expansion furnace the volcanic glass being fed in the expansion furnace as close to flame as possible while avoiding its glassification and while maintaining the volume rate of the air draft as low as possible,
   - milling the expanded volcanic glass with a fluidized-bed jet mill.

8. A process according to claim 7 wherein the temperature in the expansion furnace is comprised between 750°C and 1100°C.

**Patentansprüche**

1. Gemahlener vulkanischer Glasfüllstoff, der entweder aus expandiertem Perlit oder expandiertem Pechstein oder expandiertem Bimsstein besteht oder einen Eisengehalt von weniger als 1 Gew.-% umfasst, wobei der Perlit oder Pechstein oder Bimsstein ursprünglich, bevor er expandiert wird, einen kombinierten Wassergehalt von mehr als 2,0 Gew.-% umfasst, der einen gesamten Gehalt an Alkalis ($Na_2O+K_2O$) im Bereich von 6,0 % - 10,0 % umfasst und wobei der gemahlene vulkanische Glasfüllstoff eine mittlere Teilchengröße von weniger als 10 $\mu$m aufweist und gleichzeitig seine Teilchen eine Lamellengestalt einer Krümmung von null und ein Seitenverhältnis von mehr als 5:1 aufweisen.

2. Gemahlener vulkanischer Glasfüllstoff nach Anspruch 1, der eine mittlere Teilchengröße von weniger als 7 $\mu$m aufweist.

3. Gemahlener vulkanischer Glasfüllstoff nach Anspruch 1, der eine mittlere Teilchengröße von weniger als 5 $\mu$m aufweist.

4. Gemahlener vulkanischer Glasfüllstoff nach einem der Ansprüche 1 bis 3, wobei der Hauptbestandteil ein amorphes Siliciumdioxid ist.

5. Gemahlener vulkanischer Glasfüllstoff nach einem der Ansprüche 1 bis 4, der ferner Aluminium umfasst.

6. Polymermatrix oder Polymerfolie oder Anstrichmittel auf Wasser- oder Lösungsmittelbasis, die den gemahlenen vulkanischen Glasfüllstoff nach den Ansprüchen 1 bis 5 umfasst.

7. Verfahren für die Herstellung eines gemahlenen vulkanischen Glasfüllstoffs nach Anspruch 1, umfassend die Schritte des:

- Bereitstellens von vulkanischem Glas, das aus der Gruppe ausgewählt ist von Perlit, Pechstein und Bimsstein, mit kombiniertem Wasser von mehr als 2,0 Gew.-%,
- Expandierens des vulkanischen Glases in einem Expansionsofen, der aus der Gruppe ausgewählt ist bestehend aus einem senkrechten Expansionsofen oder einem elektrischen Expansionsofen oder einem mikrowelleninduzierten Expansionsofen, wobei das vulkanische Glas in den Expansionsofen so nahe einer Flamme wie möglich eingeführt wird, während seine Glasbildung vermieden wird und während der Volumenindex des Luftzugs so gering wie möglich gehalten wird,
- Mahlens des expandierten vulkanischen Glases mit einer Fließbettstrahlmühle.

8. Verfahren nach Anspruch 7, wobei die Temperatur in dem Expansionsofen zwischen 750 °C und 1100 °C liegt.

**Revendications**

1. Une charge de verre volcanique broyé constituée soit de perlite expansée, soit de rétinite expansée ou de pumicite expansée, ou qui comprend une teneur en fer inférieure à 1 % en poids, dans laquelle la perlite, la pumicite ou la rétinite comprennent initialement une teneur en eau combinée supérieure à 2.0 % en poids avant expansion, qui comprend une teneur en alcalis ($Na_2O+K_2O$) dans une plage de 6,0 % à 10,0 %, et dans laquelle la charge de verre volcanique broyé a une granulométrie moyenne inférieure à 10 $\mu$m et en même temps ses particules ont une forme lamellaire de courbure nulle et un rapport de forme supérieur à 5 : 1.

2. Une charge de verre volcanique broyé selon la revendication 1 ayant une granulométrie moyenne inférieure à 7 $\mu$m.

3. Une charge de verre volcanique broyé selon la revendication 1 ayant une granulométrie moyenne inférieure à 5 $\mu$m.

4. Une charge de verre volcanique broyé selon l'une quelconque des revendications 1 à 3, dans laquelle le constituant principal est la silice amorphe.

5. Une charge de verre volcanique broyé selon l'une quelconque des revendications 1 à 4, qui comprend en outre de l'aluminium.

6. Une matrice polymère ou un film polymère ou une peinture à base d'eau ou de solvant qui comprend la charge de verre volcanique broyé selon les revendications 1 à 5.

7. Un procédé de préparation d'une charge de verre volcanique broyé selon la revendication 1, comprenant les étapes consistant à :

- fournir du verre volcanique qui est choisi dans le groupe de perlite, rétinite et pumicite, avec de l'eau combinée à plus de 2.0 % en poids,
- dilater le verre volcanique dans un four d'expansion qui est choisi dans le groupe constitué par un four d'expansion vertical ou un four d'expansion électrique ou un four d'expansion induit par micro-ondes, le verre volcanique étant amené dans le four d'expansion aussi près que possible de la flamme tout en évitant sa vitrification et en maintenant le débit volumique du courant d'air aussi faible que possible,
- broyer le verre volcanique expansé à l'aide d'un broyeur à jet à lit fluidisé.

**8.** Un procédé selon la revendication 7, dans lequel la température dans le four d'expansion est comprise entre 750 °C et 1100 °C.

Fig. 1

**EP 2 444 460 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4115347 A, Pied

- GB 1516708 A, Castelli

**Non-patent literature cited in the description**

- **SODEYAMA K et al.** Preparation of fine expanded perlite. *Journal of Materials Science,* 1999, vol. 34 (10), 2461-2468